# EUROPÄISCHE PATENTANMELDUNG

(11) **EP 2 003 076 A2**
(43) Veröffentlichungstag der Anmeldung: **17.12.2008**
(21) Anmeldenummer: 08010692.5
(22) Anmeldetag: 12.06.2008
(51) Int. Cl.: B65G 67/08, B65G 69/00

(54) **Stückgutfördervorrichtung mit Scaneinrichtung**

(30) Priorität: 13.06.2007 DE 102007029252
(71) Anmelder: Nobab GmbH, 70825 Korntal (DE)
(72) Erfinder: Fischer, Claus, 70825 Korntal (DE)
(74) Vertreter: Duhme, Torsten

(57) **Zusammenfassung**

Die Erfindung betrifft eine Stückgutfördervorrichtung (10) zum Fördern eines Stückguts (12) von einer Aufnahmestelle (14) zu einer Übergabestelle (16), mit einem Förderelement (18) zum Fördern des Stückguts (12) von der Aufnahmestelle (14) zu der Übergabestelle (16) entlang einer Förderstrecke (20) und mit einer optischen Scaneinrichtung (22) zum Erfassen mindestens einer Oberfläche des Stückguts (12), das von der Stückgutfördervorrichtung (10) zu befördern ist, wobei die Scaneinrichtung (22) ein Sichtfeld (24) mit einer Zentralhalbgeraden (26) aufweist und die Zentralhalbgerade (12) nicht auf die Förderstrecke (20) gerichtet ist.

## Beschreibung

Die Erfindung betrifft eine Stückgutfördervorrichtung zum Fördern eines Stückguts von einer Aufnahmestelle zu einer Übergabestelle, mit einem Förderelement zum Fördern des Stückguts von der Aufnahmestelle zu der Übergabestelle entlang einer Förderstrecke und mit einer optischen Scaneinrichtung zum Erfassen mindestens einer Oberfläche des Stückguts, das von der Stückgutfördervorrichtung zu befördern ist, wobei die Scaneinrichtung ein Sichtfeld mit einer Zentralhalbgeraden aufweist.

Eine solche Stückgutfördervorrichtung ist aus der DE 102 55 843 A1 bekannt.

Das Aufkommen an Paketsendungen hat in der Vergangenheit, insbesondere in den letzten Jahren, stetig zugenommen. Grund hierfür ist u.a. die erhebliche Zunahme von Warenhandel, bei dem Käufer und Verkäufer räumlich weit voneinander getrennt sind. Die Zunahme wurde gerade durch neue Vertriebswege hervorgerufen, die unter Nutzung des Internets entstanden sind. Als Beispiele seien hier lediglich die Vielzahl von Online-Shops und Internet-Auktionshäuser genannt.

Bei dem Versenden von Paketen ist es unüblich, dass ein Paket auf direktem Wege vom Versender (z.B. Verkäufer) zum Empfänger (z.B. Käufer) gelangt. Vielmehr ist es oftmals so, dass auf dem Versandweg mindestens ein Paketdepot zwischengeschaltet ist. In den meisten Fällen gelangt das Paket mittels eines Lieferwagens vom Versender mittels eines Lieferwagens in ein Sammeldepot, von dem aus eine Vielzahl von Sendungen nach Ländern und/oder Regionen unterteilt zusammengeführt und mittels Flugzeug, Zug oder LKW zu einem Verteildepot transportiert werden. Im Verteildepot werden die Sendungen auf einzelne Lieferwagen aufgeteilt, und zum Empfänger gebracht.

Um die Zeit für den Versandweg und die Kosten für den Versand gering zu halten, ist es erforderlich, den Versandweg so effizient wie möglich zu gestalten. Besonderer Beachtung kommt dabei der Übergabe der Sendungen vom Lieferwagen an das Sammeldepot zu.

Im Sammeldepot ist es Aufgabe des Fahrers des Lieferwagens, die bei den Versendern eingesammelten Sendungen in den Verteil- oder Zusammenführungsprozess einzubringen. Da es nicht unüblich ist, dass ein Fahrer mehrere Hundert einzelne Sendungen vom Lieferwagen an das Sammeldepot übergeben muss, muss die Übergabe einer einzelnen Sendung an das Sammeldepot sehr schnell erfolgen können, da ansonsten aufgrund der Vielzahl der Sendungen die Effektivität in erheblichem Maße beeinträchtigt wird und die Kosten für den Paketversand steigen.

Die eingangs genannte DE 102 55 843 A1 zeigt zu diesem Zwecke eine Teleskopfördervorrichtung auf, die an ihrem vorderen Ende einen Fahrkopf (Teleskopkopf) hat, der wiederum eine eigene Antriebseinrichtung aufweist. Der Fahrkopf dient sowohl dazu, das Teleskop ein- und auszuführen als auch dazu, optional angeschlossene Zusatzgeräte, wie Handlingroboter, Endladebänder oder dergleichen zu verfahren. Zur Aufnahme solcher Geräte kann an dem Fahrkopf eine Arbeitsplatte vorgesehen sein, auf der weitere Geräte angeordnet werden können.

Mittels der Teleskopfördervorrichtung ist es möglich, die Aufnahmestelle, an der ein Stückgut aufgenommen wird, um es dann zu einer Übergabestelle zu transportieren, unmittelbar dort zu positionieren, wo sich das Stückgut im Lagerraum des Lieferwagens befindet. Auf diese Weise wird verhindert, dass der Fahrer kontinuierlich mit dem Stückgut von der Ladefläche bzw. aus dem Laderaum des Lieferwagens zur Aufnahmestelle (und zurück) laufen muss.

Um sicherzustellen, dass das mittels der Teleskopfördervorrichtung transportierte Stückgut bei seinem Eingang in das Sammeldepot erfasst wird, wird in der genannten Schrift vorgeschlagen, die Aufnahmestelle der Fördereinrichtung mit Rollen auszustatten, zwischen denen eine Kamera angeordnet ist, um Barcodes an der Unterseite des Stückguts zu erfassen. Es ist dabei jedoch nachteilig, dass die Kamera schnell verschmutzt, die Kamera nur ein sehr begrenztes Sichtfeld hat und dass eine Erkennung unmöglich ist, wenn der Fahrer das Stückgut nicht in einer bestimmten Art und Weise auf die Transporteinrichtung gelegt hat.

Im Zusammenhang mit der Erfassung von Stückgut, welches in ein Sammeldepot eingebracht wird, sei außerdem auf die EP 0 658 499 A1 verwiesen. In dieser Schrift ist eine Teleskopförderbahn zum Fördern und Vermessen von Stückgut offenbart. Es wird vorgeschlagen, entlang der Förderstrecke eine Mess- und Wägeeinrichtung anzuordnen, die auch einen Volumenmessrahmen aufweist. Ein zuverlässiges Erfassen von Informationen auf einem Stückgut, beispielsweise ein Barcode, ist aber auch hier nur dann möglich, wenn sich das Stückgut mit einer fest vorgegebenen Orientierung auf der Förderstrecke befindet. Außerdem ist keine Eingriffsmöglichkeit vorgesehen, wenn bei der Erfassung des Stückguts an der Mess- und Wägeeinrichtung ein Fehler auftritt. Dies bedeutet, dass obwohl der Fehler bei der Erkennung in aller Regel nur einer falschen Positionierung des Stückguts auf der Transportfläche zuzurechnen ist, die korrekte Erfassung des Stückguts nunmehr kostenintensiv und zeitaufwändig an einem Sonderarbeitsplatz erfolgen muss.

Es ist eine Aufgabe der vorliegenden Erfindung, eine verbesserte Stückgutfördervorrichtung aufzuzeigen, die eine hohe Erkennungsquote bei dem Einbringen von Stückgut in das Sammeldepot ermöglicht. Ferner soll es möglich sein, die Stückgutfördervorrichtung, dabei insbesondere die Scaneinrichtung, robust auszugestalten, so dass Beschädigungen der Vorrichtungen, beispielsweise durch Unachtsamkeit oder durch eine Fehlbedienung, vermieden werden können.

Diese Aufgabe wird mit einer Stückgutfördervorrichtung der eingangs genannten Art gelöst, bei der die Zentralhalbgerade nicht auf die Förderstrecke gerichtet ist.

Während die Vorrichtungen gemäß dem Stand der Technik auf dem Prinzip beruhen, dass sich ein Stückgut auf der Förderstrecke befindet und mit einer Scaneinrichtung abgetastet wird, ihre Zentralhalbgerade ihres Sichtfelds auf die Förderstrecke gerichtet ist, beschreitet die vorliegende Erfindung einen grundsätzlich anderen Weg, indem die Zentralhalbgerade nicht auf die Förderstrecke gerichtet ist. Insbesondere weist gemäß der vorliegenden Erfindung die Zentralhalbgerade von der Förderstrecke weg.

Bei dem Sichtfeld der Scaneinrichtung handelt es sich um den Bereich, der von der Scaneinrichtung erfasst werden kann. D.h., ein Element innerhalb des Sichtfelds kann von der Scaneinrichtung erkannt werden, während ein Element außerhalb des Sichtfelds - ohne weitere Maßnahmen - nicht erkannt wird. Bezogen auf ein optisches Linsensystem ist das Sichtfeld der Bereich des Bildraums, der auf einen Detektor der Scaneinrichtung abgebildet werden kann.

Die Zentralhalbgerade dieses Sichtfelds ist die Halbgerade, die von der Scaneinrichtung in Richtung des zu überwachenden Bereichs ausgeht und dabei gewissermaßen mittig im Sichtfeld liegt. Bezogen auf ein optisches Linsensystem, das über ein kegelförmiges Sichtfeld verfügt, würde die Zentralhalbgerade entlang der Kegelachse des Sichtfelds verlaufen. Bei einem pyramidenförmigen Sichtfeld würde die Zentralhalbgerade entlang der Mittelsenkrechten des Sichtfelds verlaufen. Bei komplexeren Sichtfeldern kann man die Zentralhalbgerade dahingehend verstehen, dass sie durch das Zentrum oder den Schwerpunkt des Sichtfelds führt. Für den Fall des optischen Linsensystems fällt die Zentralhalbgerade mit der optischen Achse zusammen.

Ein möglicher Ablauf, wie er durch die erfindungsgemäße Stückgutfördervorrichtung realisiert werden kann, sieht wie folgt aus: Das Stückgut wird vor der Scaneinrichtung positioniert und ein im Sichtfeld der Scaneinrichtung befindlicher Barcode, Routing-Label, etc. wird erfasst. Wenn die Erkennung erfolgreich verläuft, kann das Stückgut auf die Förderstrecke gelegt und zur Übergabestelle transportiert werden.

Falls die Erkennung nicht erfolgreich war, können weitere Erkennungsversuche durchgeführt werden, insbesondere unter Lageveränderung des Stückguts. Bei Bedarf kann die Stückgutfördervorrichtung derart konfiguriert werden, dass kein Stückgut entlang der Förderstrecke transportiert wird, welches nicht einen erfolgreichen Erkennungsprozess durchlaufen hat. Die Justierung des Stückguts relativ zur Scaneinrichtung wird praktischerweise durch den Fahrer des Lieferwagens vorgenommen, kann aber auch maschinell mittels einer entsprechenden Positioniereinrichtung vorgenommen werden.

Dadurch, dass die Zentralhalbgerade nicht auf die Förderstrecke gerichtet ist, ergeben sich gegenüber dem Stand der Technik grundlegende neue Möglichkeiten, die Scaneinrichtung anzuordnen und auszubilden. Wie nachfolgend noch näher erläutert wird, erhält man auf diese Weise, insbesondere in Verbindung mit weiteren vorteilhaften Ausgestaltungen der Erfindung, eine Stückgutfördervorrichtung mit einer hohen Erkennungsquote, die zudem sehr robust ausgeführt werden kann.

Das Erfassen mindestens einer Oberfläche des Stückguts mittels der Scaneinrichtung bedeutet, dass auf der Oberfläche befindliche Informationen erfasst werden sollen, wenngleich bei einer bevorzugten Ausführungsform zusätzlich auch eine Erfassung von Kanten des Stückguts und/oder eine Bestimmung der Position/Orientierung des Stückguts erfolgt.

Bei den Informationen handelt es sich insbesondere um maschinenlesbare Symbole, einschließlich Barcodes, 2D-Barcodes, Buchstaben und Zahlen. Daher ist die Scaneinrichtung insbesondere für eine Erfassung von maschinenlesbaren Symbolen ausgebildet, insbesondere als Barcode-Scanner, OCR-Scanner oder kombinierter Barcode/OCR-Scanner.

Aus den erfassten Informationen werden insbesondere auf das Stückgut bezogene Zielinformationen gewonnen, bevorzugt eine oder mehrere Weg- und/oder Zielinformationen aus der Gruppe von endgültigem Zielort, nächstem Zwischenziel, Routingstrecke, Zwischenlagerstelle im Depot und Sonderbearbeitungsplatz.

Damit ist die oben genannte Aufgabe vollständig gelöst.

In einer Ausgestaltung der Erfindung bildet die Förderstrecke eine Förderfläche mit einer Förderflächennormalen, und die Zentralhalbgerade steht in einem Winkel zu der Förderflächennormalen, wobei der Winkel bevorzugt zwischen 5° und 175°, besonders bevorzugt zwischen 60° und 120° und insbesondere zwischen 80° und 100° gewählt ist.

Wenn die Scaneinrichtung derart angeordnet ist, dass sich der genannte Winkel einstellt, ist eine bequeme Erfassung des Stückguts möglich, insbesondere während der Bewegung des Stückguts auf die Förderstrecke.

In einer weiteren Ausgestaltung der Erfindung steht die Zentralhalbgerade in einem Winkel von größer als 90° zu einer Förderrichtung zwischen der Aufnahmestelle und der Übergabestelle, wobei der Winkel bevorzugt zwischen 95° und 305°, besonders bevorzugt zwischen 150° und 210° und insbesondere zwischen 170° und 190° gewählt ist.

Auf diese Weise kann besonders gut ein Arbeitsfluss bezogen auf die Förderrichtung der Stückgutfördervorrichtung realisiert werden. So kann insbesondere ein Stückgut im Wesentlichen in Förderrichtung zur Schutzrecht gebracht werden, von der Scaneinrichtung erfasst werden und dann in im Wesentlichen unveränderter Richtung auf die Förderstrecke gelegt werden.

Bei einer weiteren Ausgestaltung der Erfindung bildet die Förderstrecke eine Förderfläche einer Förderflächennormalen und liegt die Zentralhalbgerade in einer Ebene, die von der Förderflächennormalen und einer Förderrichtung zwischen der Aufnahmestelle und der Übergabestelle gebildet ist.

Dies ermöglicht eine besonders einfache und kostengünstige Anordnung der Scaneinrichtung in Bezug auf die Förderstrecke.

Bei einer weiteren Ausgestaltung der Erfindung ist die Zentralhalbgerade im Wesentlichen parallel zu einer stromaufwärtigen Richtung der Förderstrecke.

Diese Ausgestaltung ist kostengünstig zu realisieren, wobei die Zentralhalbgerade zudem eine Ausrichtung hat, die sich gut in bestehende Arbeitsprozesse, insbesondere Aufnehmen eines Stückguts aus dem Laderaum oder von der Ladefläche und Ablegen auf der Stückgutfördereinrichtung, integriert.

Bei einer weiteren Ausgestaltung der Erfindung ist die Scaneinrichtung in einer stromaufwärtigen Richtung von der Aufnahmestelle angeordnet.

Hierbei befindet sich die Scaneinheit in einer für die meisten Anwendungen besonders gut geeigneten Position und kann durch weitere geeignete Maßnahmen, die nachfolgend noch beschrieben werden, vor einer Beschädigung oder Dejustierung gut geschützt werden. Wenn man die stromaufwärtige Richtung im Sinne einer Längserstreckung zwischen der Aufnahme- und der Übergabestelle versteht, kann man auch davon sprechen, dass die Scaneinrichtung in Verlängerung dieser Längserstreckung angeordnet ist.

Bei einer weiteren Ausgestaltung der Erfindung ist die Scaneinrichtung seitlich der Förderstrecke angeordnet.

Diese Ausgestaltung ist besonders für solche Platzverhältnisse geeignet, bei denen entlang einer gedachten Linie entgegen der Förderrichtung nur wenig Platz zur Verfügung steht. Diese Ausgestaltung ermöglicht es dann, das Stückgut von der Seite der Stückgutfördervorrichtung zuzuführen, mittels der Scaneinrichtung zu erfassen und der Förderstrecke zuzuführen.

Bei einer weiteren Ausgestaltung der Erfindung ist die Scaneinrichtung relativ zur Förderstrecke fest angeordnet.

In diesem Fall kann die Scaneinrichtung besonders robust ausgeführt werden, insbesondere indem sie an einem Rahmen der Stückgutfördervorrichtung befestigt wird oder in ein Gehäuse der Stückgutfördervorrichtung mit integriert wird.

Bei einer weiteren Ausgestaltung der Erfindung ist zumindest ein Teil der Scaneinrichtung verschwenkbar ausgebildet, um den Winkel der Zentralhalbgeraden relativ zur stromaufwärtigen Richtung zu variieren.

Dadurch kann die Stückgutfördervorrichtung gut auf verschiedene Arbeitsbedingungen eingestellt werden. Beispielsweise kann es hilfreich sein, wenn die Ausrichtung der Zentralhalbgeraden bei Entladen eines kleinen Lieferwagens anders gewählt werden kann als beim Entladen eines großen LKWs. Ferner ist es beim Erfassen von einem kleinen Stückgut vorteilhaft, wenn die Zentralhalbgerade nach oben weist, während es beim Erfassen eines großen und/oder schweren Stückguts hilfreich ist, wenn die Zentralhalbgerade nach unten gerichtet werden kann. Insgesamt wird die Flexibilität der Stückgutfördervorrichtung verbessert und das Arbeiten mit der Stückgutfördervorrichtung vereinfacht.

Bei einer weiteren Ausgestaltung der Erfindung weist die Stückgutfördervorrichtung einen Drucker auf, der zum Drucken eines Labels zur Identifizierung des erfassten Stückguts anhand der mittels der Scaneinrichtung erfassten Informationen ausgebildet ist.

Damit ein Stückgut ab dem Eingang im Sammeldepot richtig geleitet wird und dann am richtigen Verteildepot (und/oder beim richtigen Empfänger) ankommt, ist es bekannt, ein Stückgut mit einem Routing-Label zu versehen. Das Routing-Label kann auf seinem Transportweg automatisiert gelesen und das Stückgut automatisiert auf die richtige Route geführt werden.

Kann ein Routing-Label während des Sortier- und Verteilprozesses nicht gelesen oder nicht korrekt gelesen werden, so muss das entsprechende Stückgut zu einem Sonderarbeitsplatz für eine manuelle Bearbeitung geleitet werden. Dies bedeutet einen Zeitverlust und erhebliche Kosten. Diese Situation tritt in erheblicher Anzahl auf, beispielsweise weil das Stückgut noch keinen Routing-Label hat oder weil ein vorhandenes Routing-Label - z.B. aufgrund von Verschmutzung - nicht lesbar ist.

Mittels der vorgeschlagenen Ausgestaltung wird dieses Problem auf einfache Weise gelöst. Kann ein Routing-Label nicht oder nicht vollständig identifiziert werden, werden weitere Informationen hinzugezogen, beispielsweise die auf dem Stückgut angegebene Zieladresse, um für das Stückgut einen Routing-Label zu erstellen. Die erforderliche Information kann mittels OCR oder durch eine manuelle Eingabe bereitgestellt werden.

Stehen ausreichend Informationen zur Verfügung, um das erforderliche Routing-Label zu erzeugen, so wird das Routing-Label mittels des Druckers ausgedruckt und an dem Stückgut befestigt. Nun kann das Stückgut in das Sammeldepot eingebracht und dort korrekt verteilt werden.

Bei einer weiteren Ausgestaltung der Erfindung ist der Drucker an der Scaneinrichtung angeordnet oder in die Scaneinrichtung integriert.

Es ist generell denkbar, dass der Drucker von der Stückgutfördervorrichtung getrennte installiert ist, insbesondere, wenn es sich um einen Hochgeschwindigkeitsdrucker handelt, der tendenziell größere Abmessungen hat. In diesem Fall erhält der Drucker die erforderlichen Daten mittels kabelgebundener oder kabelloser Kommunikation. Die vorgeschlagene Ausführungsform bietet aber einen besonders guten Schutz für den Drucker. Außerdem kann die Arbeitseffizienz gesteigert werden, da das Routing-Label unmittelbar dort ausgegeben wird, wo der Scanvorgang stattgefunden hat.

Bei einer weiteren Ausgestaltung der Erfindung weist die Stückgutfördervorrichtung eine Beleuchtungseinrichtung auf, die zur Beleuchtung zumindest eines Bereichs des Sichtfelds ausgebildet ist.

Bei dieser Ausgestaltung wird sichergestellt, dass eine gute Ausleuchtung des von der Scaneinrichtung zu erfassenden Bereichs auf dem Stückgut auch unter schlechten Beleuchtungsbedingungen gegeben ist. Während einige Scaneinrichtungen nicht auf eine gute Ausleuchtung angewiesen sind (als Beispiel seien hier Laserscanner genannt) können durch die Beleuchtungseinrichtung auch preiswerte bildgebende Systeme eingesetzt werden, wie z.B. CCD-Kameras. Die Beleuchtungseinrichtung stellt sicher, dass die von der im Sichtfeld der Scaneinrichtung verfügbaren Informationen gut erfasst werden können. Handelt es sich bei den erfassten Informationen um Bildinformationen, so kann die Beleuchtungseinrichtung insbesondere eine ausreichende Schärfe und einen ausreichenden Kontrast sicherstellen.

Bei einer weiteren Ausgestaltung der Erfindung weist die Beleuchtungseinrichtung eine Vielzahl von Leuchtdioden auf.

Auf diese Weise lässt sich die Beleuchtungseinrichtung preiswert realisieren und erlaubt zudem eine gute Ausleuchtung des Sichtfelds.

Bei einer weiteren Ausgestaltung der Erfindung weist die Stückgutfördervorrichtung mindestens ein Leuchtmittel zur Anzeige einer erwarteten Positionierung und/oder Ausrichtung des Stückguts relativ zum Sichtfeld der Scaneinrichtung auf.

Auf diese Weise kann die Qualität bzw. die Geschwindigkeit der Erfassung eines Stückguts verbessert werden, da der Benutzer nunmehr angezeigt bekommt, wo das Stückgut für eine gute Erfassung zu positionieren ist und/oder wie das Stückgut auszurichten ist. Die Leuchtmittel sind dabei insbesondere als besonders helle, ggf. auch gerichtete, LEDs oder als Laserdioden ausgeführt.

Bei einer weiteren Ausgestaltung der Erfindung weist die Scaneinrichtung mindestens einen Abstandsbolzen auf, der einen Abstand zur Scaneinrichtung bestimmt, wobei der Abstandsbolzen vorzugsweise im Wesentlichen parallel zur Zentralhalbgeraden ist.

Um optimale Ergebnisse beim Erfassen des Stückguts mittels der Scaneinheit zu erzielen, ist es vorteilhaft, wenn sich das Stückgut in einer definierten Entfernung von der Scaneinrichtung befindet. Dieser Abstand kann mittels des Abstandsbolzens, insbesondere mittels zwei oder drei Abstandsbolzen, gut festgelegt werden. Dazu führt der Benutzer das Stückgut an die Scaneinrichtung heran, bis es an dem mindestens einen Abstandsbolzen anliegt. Aufgrund der vorgegebenen Entfernung, die auf die Scaneinrichtung abgestimmt ist, lassen sich besonders gute Bilder erzielen.

Bei einer Ausgestaltung der Erfindung ist der Abstandsbolzen gegen ein elastisches Element, insbesondere eine Feder, in seiner Länge veränderbar.

Auf diese Weise kann ein Stoß durch ein Stückgut gegen die Stückgutfördervorrichtung abgefangen und gedämpft werden. Dies ist insbesondere bei großem und/oder schwerem Stückgut hilfreich, da sich dieses im Vergleich zu kleinem Stückgut nicht so einfach relativ zur Scaneinrichtung positionieren lässt. Das elastische Element lässt sich besonders einfach als Feder realisieren, doch sind auch Ausführungen als Gummikissen, oder abgeschlossenes Luftvolumen denkbar.

Bei einer weiteren Ausgestaltung der Erfindung ist die Scaneinrichtung zum Ermitteln eines Barcodes und/oder zum Auslesen eines RFID-Chips ausgebildet.

Da die Auswertung eines Barcodes in der Regel schneller durchzuführen ist, als das Auffinden und Auswerten eines Routing-Labels (oder einer mittels OCR erfassten Adresse), kann die Verarbeitungsgeschwindigkeit erhöht werden, indem der Versuch unternommen wird, einen Barcode auf dem Stückgut zu identifizieren. Wird ein solcher Barcode identifiziert, kann die daraus erhaltene Information unmittelbar weiterverarbeitet werden, ohne auf weitere Informationen warten zu müssen, die sich evtl. noch durch Auffinden eines Routing-Labels oder einer OCR-lesbaren Adresse gewinnen lassen. Ferner kann ein RFID-Leser eingesetzt werden, um die Informationen zu Stückgut, das mit einem modernen RFID-Chip ausgestattet ist, unmittelbar zu erfassen.

Bei einer weiteren Ausgestaltung der Erfindung weist die Scaneinrichtung mindestens ein stoßabsorbierendes Element auf.

Dadurch kann verhindert werden, dass ein Stoß gegen die Scaneinrichtung ohne Dämpfung direkt auf die in der Scaneinrichtung enthaltene und in der Regel empfindliche Optik und Elektronik wirkt. Das stoßabsorbierende Element kann dabei sowohl innerhalb der Scaneinrichtung, beispielsweise zwischen einem Gehäuse und der Optik/Elektronik, und/oder zwischen der Scaneinrichtung und ihrer Befestigung an der Stückgutfördervorrichtung angeordnet sein.

Bei einer weiteren Ausgestaltung der Erfindung ist die Scaneinrichtung zumindest teilweise, und insbesondere im Bereich des Sichtfelds, durch eine robuste, transparente Abdeckung geschützt.

Aufgrund der großen Anzahl von Stückgut, das jeden Tag gescannt und auf die Stückgutfördervorrichtung gelegt wird, besteht die Möglichkeit, dass die Scaneinrichtung während des Betriebs beschädigt wird, beispielsweise durch Unachtsamkeit. Dabei ist insbesondere der optische Teil der Scaneinrichtung betroffen, da er für eine schnelle und effiziente Verarbeitung von Stückgut qualitativ gute Bilder erzeugen muss. Durch die robuste, transparente Abdeckung kann der optische Teil vor den allermeisten Beschädigungen geschützt werden.

In einer weiteren Ausgestaltung der Erfindung ist die Scaneinrichtung zumindest teilweise, und insbesondere außerhalb des Bereichs des Sichtfelds, durch eine metallische Abdeckung geschützt.

Auch dies trägt, wie zuvor bereits erläutert, zum Schutz der Scaneinrichtung während des Betriebs bei.

In einer weiteren Ausgestaltung der Erfindung weist die Scaneinrichtung einen Scanner auf, der relativ zur Scaneinrichtung beweglich und zum Erfassen der Oberfläche des Stückguts ausgebildet ist.

Mittels der vorgeschlagenen Scaneinrichtung lassen sich eine Vielzahl von Sendungen schnell und einfach erfassen. Es könnte sich jedoch bei besonders großem oder sperrigem Stückgut die Schwierigkeit ergeben, den für die Erfassung des Stückguts erforderlichen Bereich in das Sichtfeld der Scaneinrichtung zu bewegen. Um auch bei derartigem Stückgut die erforderliche Erfassung durchzuführen, wird der Einsatz eines zusätzlichen Scanners, insbesondere eines tragbaren Handscanners, vorgeschlagen. Da das Handling mit dem zusätzlichen Scanner aufwändiger ist und in der Regel mehr Zeit benötigt als mit der Scaneinrichtung, steht der Scanner daher in erster Linie für die Erfassung an ansonsten schwer zugänglichen Stellen zur Verfügung.

Bei einer weiteren Ausgestaltung der Erfindung weist das Förderelement mindestens ein Rollen- und/oder ein Bandförderelement auf.

Dies ermöglicht eine preiswerte und auf mechanisch zuverlässige Realisierung der Förderstrecke.

Bei einer weiteren Ausgestaltung der Erfindung ist die Stückgutfördervorrichtung als Teleskopfördervorrichtung ausgebildet, wobei die Scaneinrichtung an einem Teleskopkopf der Teleskopfördervorrichtung angeordnet ist.

Mit dieser Maßnahme kann das Ausladen eines Lieferwagens bzw. LKWs beschleunigt werden, da die Aufnahmestelle der Stückgutfördervorrichtung stets ungefähr dort positioniert werden kann, wo sich das Stückgut im Laderaum oder auf der Ladefläche befindet. Für Details hinsichtlich einer Teleskopfördervorrichtung wird hiermit auf die eingangs genannte DE 102 55 843 A1 verwiesen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Figur 1: das Prinzip des Entladens eines Lieferwagens mit einer als Teleskopfördervorrichtung ausgebildeten Stückgutfördervorrichtung gemäß der vorliegenden Erfindung;

- Figur 2: eine detailliertere Darstellung der erfindungsgemäßen Stückgutfördervorrichtung;
- Figur 3a: eine Detailansicht der Aufnahmestelle und der Scaneinrichtung der erfindungsgemäßen Stückgutfördervorrichtung;
- Figur 3b: die Darstellung der Figur 3a, zusätzlich mit einem Koordinatensystem und der Verdeutlichung der Zentralhalbgeraden;
- Figur 4: eine Ansicht auf die Scaneinrichtung von vorne;
- Figur 5: eine teilweise Schnittansicht durch einen Abstandsbolzen von der Scaneinrichtung gemäß Figur 4;
- Figur 6a: eine erste alternative Anordnung der Scaneinrichtung;
- Figur 6b: eine zweite alternative Anordnung der Scaneinrichtung;
- Figur 6c: eine dritte alternative Anordnung der Scaneinrichtung; und
- Figur 6d: eine vierte alternative Anordnung der Scaneinrichtung.

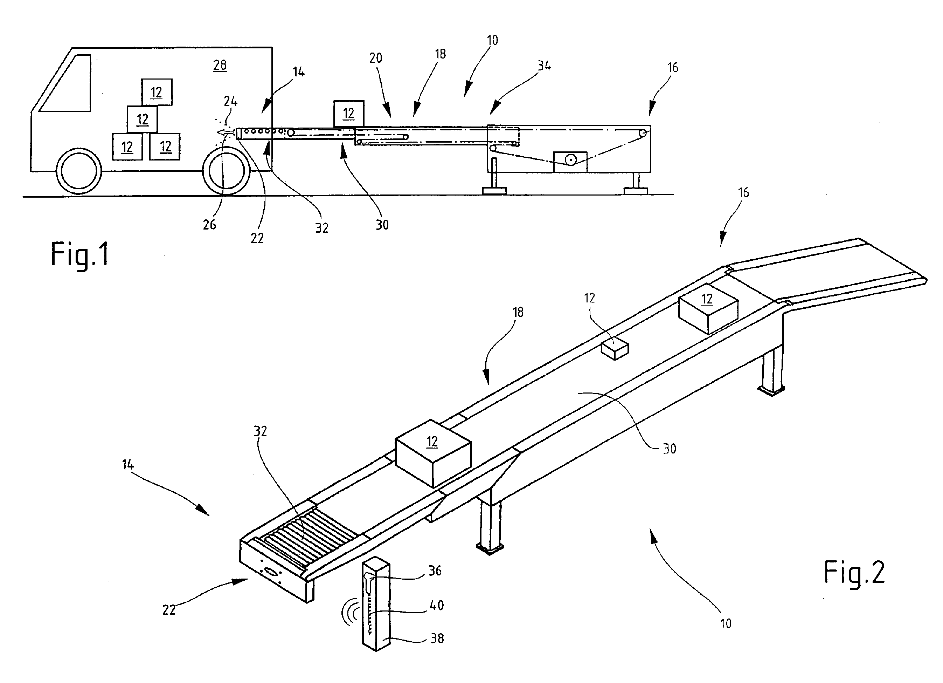

Figur 1 zeigt eine Stückgutfördervorrichtung 10 zum Fördern eines Stückguts 12 von einer Aufnahmestelle 14 zu einer Übergabestelle 16. Die Stückgutfördervorrichtung 10 weist ein Förderelement 18 auf, mit dem Stückgut 12 von der Aufnahmestelle 14 stromabwärts zur Übergabestelle 16 gefördert bzw. transportiert werden kann.

Die Stückgutfördervorrichtung 10 weist eine optische Scaneinrichtung 22 auf, mit der mindestens eine Oberfläche des Stückguts 12, das von der Stückgutfördervorrichtung 10 zu befördern ist, erfasst werden kann. Die Scaneinrichtung hat ein Sichtfeld 24 mit einer Zentralhalbgeraden 26, die beide symbolisch angedeutet sind.

Die Scaneinrichtung 22 ist in einer stromaufwärtigen Richtung vom der Aufnahmestelle 14 angeordnet. Außerdem ist es bei diesem Ausführungsbeispiel so, dass die Scaneinrichtung 22 relativ zur Förderstrecke 20 fest angeordnet ist.

Das Förderelement 18 weist bei dieser Ausführungsform sowohl Rollenförderelemente 32 als auch ein Bandförderelement 34 auf. Sowohl die Rollenförderelemente 32 als auch das Bandförderelement 34 sind angetrieben, wobei die Rollenförderelemente 32 aber auch nicht-angetrieben ausgebildet sein können. Die Förderstrecke 20 wird hier durch die Rollen- und Bandförderelemente 32, 34 gebildet.

Das Entladen des Lieferwagens 28 geht dabei wie folgt vonstatten. Der Teleskopkopf 30 der Stückgutfördervorrichtung 10 wird in den geöffneten Lieferwagen 28 hineingefahren, und zwar in etwa an die Stelle, wo der Fahrer (nicht gezeigt) das Stückgut 12 mit einer einfachen Bewegung auf die Aufnahmestelle 14 legen kann. In seiner Bewegung führt der Fahrer das Stückgut 12 an der Scaneinrichtung 22 vorbei (oder positioniert das Stückgut 12 für eine bestimmte Zeit vor der Scaneinrichtung 22). Das Stückgut 12 wird erfasst, beispielsweise anhand eines aufgeklebten Barcodes, Routing-Labels, Adressaufklebers, etc. Bei einer erfolgreichen Erkennung wird das Stückgut 12 entlang der Förderstrecke 20 zur Übergabestelle 16 transportiert.

Um eine besonders zuverlässige Erfassung des Stückguts 12 zu gewährleisten, verfügt die Scaneinrichtung 22 über weitere Merkmale, die noch im Hinblick auf die nachfolgenden Figuren näher erläutert werden. Hat die standardmäßige Erfassung des Stückguts 12 durch die Scaneinrichtung 22 nicht die benötigten Informationen erbracht, kann versucht werden, die Information auf anderem Wege zu erhalten. Dazu zählt auch eine manuelle Eingabe der Information durch den Fahrer.

Fig. 2 zeigt die erfindungsgemäße Stückgutfördervorrichtung 10 in einer Draufsicht von schräg oben. Es lassen sich nun die zuvor bereits beschriebenen Elemente der Stückgutfördervorrichtung 10 gut erkennen.

Im Vergleich zur Fig. 1 ist hier außerdem ein Scanner 36 an einer Säule 38 gezeigt, der zu der Scanneinrichtung 22 gehört. Der Scanner 36 ist relativ zur Scaneinrichtung 22 beweglich und zum Erfassen der Oberfläche eines Stückguts 12 ausgebildet. Der Scanner 36 ist hier mittels eines Kabels 40 mit der Säule 34 verbunden, die vom Scanner 36 erfasste Informationen an die Scaneinrichtung 22 sendet. Bei einer weiteren bevorzugten Ausführungsform sendet der Scanner 36 direkt an die Scaneinrichtung 22. Soll eine kabellose Datenübertragung vermieden werden, wird die Säule 38 bei einer weiteren Ausführungsform mittels eines Kabels mit der Scaneinrichtung 22 verbunden. Mittels des Scanners 36 lässt sich auch schweres und/oder sperriges Stückgut 12 gut erfassen.

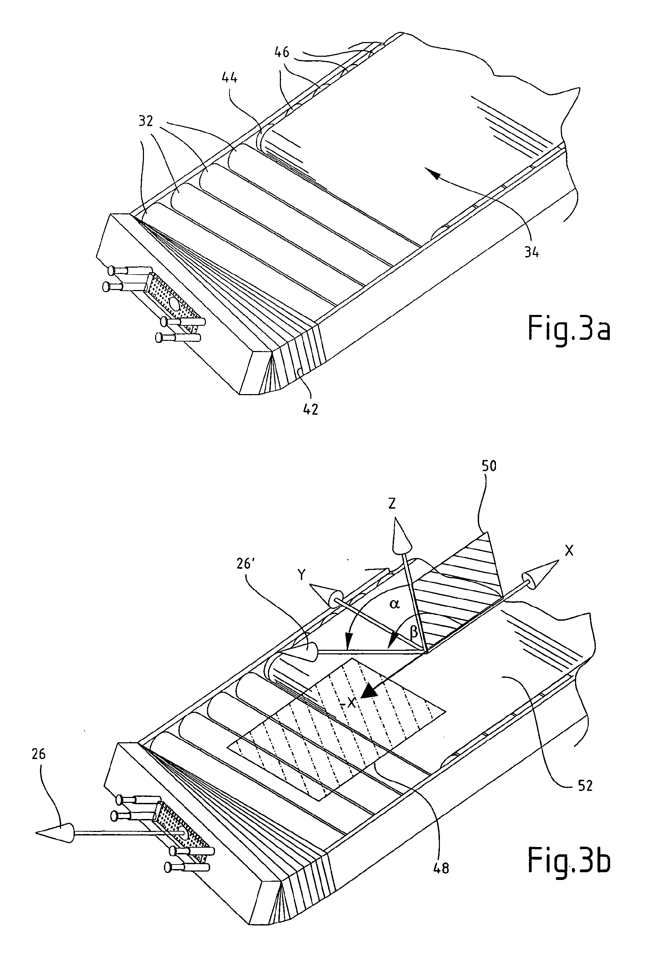

Fig. 3a zeigt eine Draufsicht von schräg oben auf die Aufnahmestelle 14 einer weiteren erfindungsgemäßen Stückgutfördervorrichtung 10 im Vergleich zur Scaneinrichtung 22 der Fig. 2 ist die hier gezeigte Scaneinrichtung 22 verschwenkbar ausgebildet und hier in zwei Richtungen verschwenkt. Die Verschwenkbarkeit wird mittels einer Halterung erzielt, die gleichzeitig als stoßabsorbierendes Element 42 fungiert.

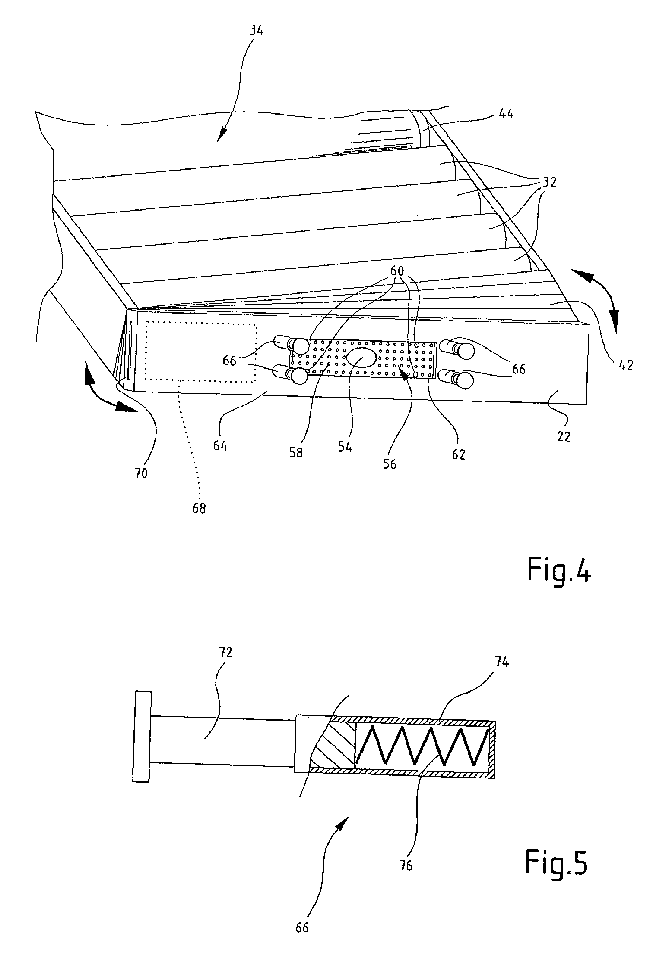

An der Scaneinrichtung 22 sind weitere konstruktive Details zu erkennen, die im weiteren Verlauf unter Bezugnahme auf die Fig. 4 noch erläutert werden.

Das Förderelement 18 ist wiederum beispielhaft als eine Kombination von Rollenförderelementen 32 und einem Bandförderelement 34 ausgebildet. Das Bandförderelement 34 ist hier ein endloses Förderband, welches um eine Antriebsrolle 44 geführt ist und über mehrere Tragrollen 46 führt. Die Rollenförderelemente 32 sind bei diesem Ausführungsbeispiel nicht angetrieben.

Fig. 3b zeigt grundsätzlich dieselbe Darstellung wie Fig. 3a, wobei nun aber die verschiedenen Richtungen und Ebenen, auf die Bezug genommen wird, verdeutlicht werden.

Dabei sind zunächst die drei Achsen X, Y, Z eines kartesischen Koordinatensystems dargestellt. Ferner sind symbolisch zwei Ebenen 48, 50 dargestellt, die sich natürlich tatsächlich unendlich weit erstrecken. Die Ebene 48 stellt eine Förderfläche der Förderstrecke 20 dar. Im Bereich der Rollenförderelemente 32 wird die Förderfläche 48 von den obersten Bereichen der Rollenförderelemente 32 gebildet. Im Bereich des Bandförderelements 34 wird die Förderfläche 48 von der Oberfläche des Bands 52 gebildet.

Die Achse X entspricht einer Förderrichtung der Stückgutfördervorrichtung 10. Außerdem ist auch die stromaufwärtige Richtung -X dargestellt. Die Achse Z entspricht einer Förderflächennormalen der Förderfläche 48. Die Ebene 50 wird von der Förderflächennormalen und der Förderrichtung gebildet.

In der Fig. 3b ist außerdem die Zentralhalbgerade 26 des Sichtfelds 24 der Scaneinrichtung 22 dargestellt. Wie bereits in der Beschreibungseinleitung erläutert, beginnt die Zentralhalbgerade 26 an der Scaneinrichtung 22 und befindet sich gewissermaßen in der Mitte des Sichtfelds 24. Um die Orientierung der Zentralhalbgeraden 26 bezogen auf das kartesische Koordinatensystem mit den Achsen X, Y, Z zu verdeutlichen, wurde die Zentralhalbgerade 26 außerdem mit gleicher Orientierung als Richtungsvektor 26' in den Ursprung der Achsen X, Y, Z gelegt.

Hier ist nun zu erkennen, dass der Richtungsvektor 26' - und damit die Zentralhalbgerade 26 - in einem Winkel α zur Förderflächennormalen und in einem Winkel β zur Förderrichtung steht. Der Winkel α liegt bevorzugt zwischen 5° und 175°, besonders bevorzugt zwischen 60° und 120° und insbesondere zwischen 80° und 100°. Der Winkel β liegt bevorzugt zwischen 95° und 265°, besonders bevorzugt zwischen 150° und 210° und insbesondere zwischen 170° und 190°. Bei diesem Ausführungsbeispiel liegt die Zentralhalbgerade 26 nicht in der Ebene 50.

Fig. 4 zeigt eine leicht schräge Draufsicht auf die Scaneinrichtung 22 von vorne. Die Optik 54 der Scaneinrichtung 22 ist hier lediglich symbolisch dargestellt. Die Bilderfassung kann dabei insbesondere mittels einer CCD-Kamera oder eines Laserscanners erfolgen.

In einem rechteckigen Bereich um die Optik 54 herum, ist eine Beleuchtungseinrichtung 56 mit einer Vielzahl von Leuchtdioden 58 angeordnet, von denen lediglich eine mit einem Bezugszeichen versehen wurde. Die Beleuchtungseinrichtung 56 dient der Beleuchtung zumindest eines Bereichs des Sichtfelds 24 der Scaneinrichtung 22. Auf diese Weise lassen sich Bilder vom Stückgut 12 mit guter Qualität erzeugen. Die Scaneinrichtung 22 weist ferner vier Leuchtmittel 60 auf, hier Laserdioden, mit denen die Positionierung eines Stückguts 12 relativ zur Optik 54 der Scaneinrichtung 22 vereinfacht werden kann.

Die Optik 54, Leuchtdioden 58 und Laserdioden 60 sind durch eine robuste, transparente Abdeckung 62 geschützt. Die anderen Bereiche der Scaneinrichtung 22 sind durch eine metallische Abdeckung 64 geschützt.

Eine weitere Besonderheit der gezeigten Scaneinrichtung 22 ist, dass in der Scaneinrichtung 22 ein Drucker 68 zum Drucken eines Labels, insbesondere eines Routing-Labels, integriert ist.

Auf diese Weise kann unmittelbar vor der Aufnahme des Stückguts 12 durch die Stückgutfördereinrichtung 10 ein Label zur Identifizierung des erfassten Stückguts 12 gedruckt werden, und zwar anhand der mittels der Scaneinrichtung 22 erfassten oder vom Fahrer eingegebenen Informationen. Das Label wird dann durch den Ausgabeschacht 70 ausgeworfen.

An der Scaneinrichtung sind ferner vier Abstandsbolzen 66 angeordnet, die hier parallel zur Zentralhalbgeraden 26 sind. Mittels der Abstandsbolzen kann der Abstand eines Stückguts 12 zur Scaneinrichtung 22 bestimmt werden. Der Aufbau der Abstandsbolzen 66 wird nachfolgend noch näher erläutert.

In der Fig. 5 ist eine teilgeschnittene Ansicht eines Abstandsbolzens 66 gemäß der vorliegenden Erfindung gezeigt. Der Abstandsbolzen 66 besteht dabei aus einem Stempel 72, der in einer Hülse 74 geführt ist. Zwischen dem Boden des Stempels 72 und dem Boden der Hülse 74 ist eine Feder 76 angeordnet, die einem Eindringen des Stempels 72 in die Hülse 74 entgegenwirkt. Dadurch ist der Abstandsbolzen 66 unter Krafteinwirkung in seiner Länge veränderbar. Dadurch wird es ermöglicht, dass auch ein großes Stückgut 12 vor die Scaneinrichtung 22 gehalten werden kann und bei einer zu heftigen Annäherung an die Scaneinrichtung 22 die Energie von den Abstandsbolzen 66 abgefedert wird.

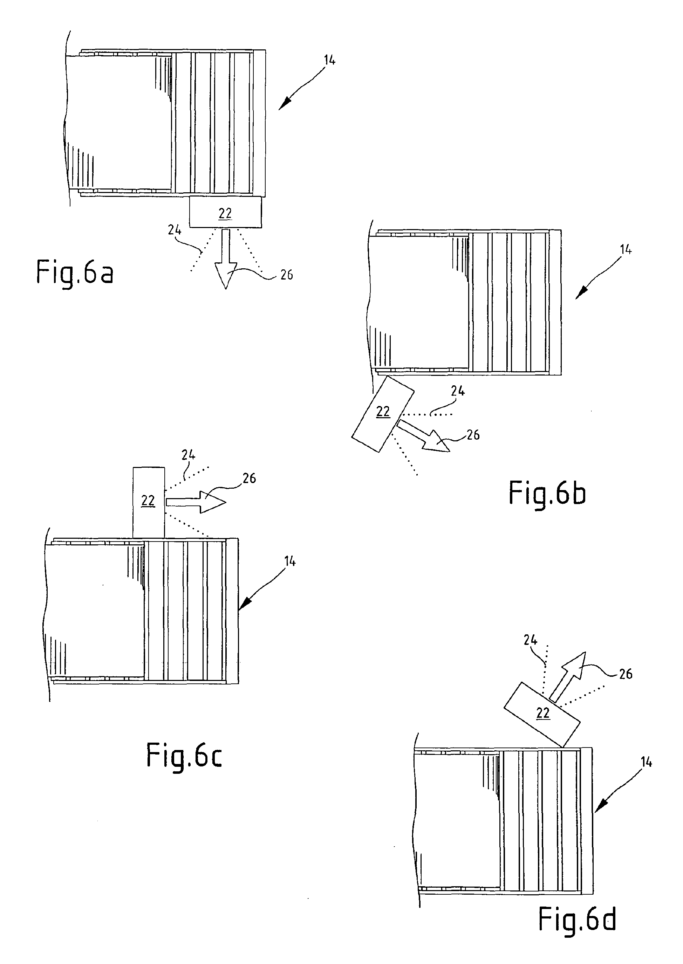

In den Fig. 6a bis 6d sind verschiedene weitere Alternativen gezeigt, wie die Scaneinrichtung 22 an der Stückgutfördervorrichtung 10 angeordnet werden kann. Dazu sind jeweils die Aufnahmestelle 14 der Stückgutvorrichtung 10 mit einer Scaneinrichtung 22 und deren Sichtfeld 24 sowie Zentralhalbgerade 26 von oben gezeigt. Es ist gut zu erkennen, dass die Erfindung eine Vielzahl von Möglichkeiten der Ausgestaltung der erfindungsgemäßen Stückgutfördervorrichtung 10 ermöglicht.

Insgesamt wurde hier eine neue Stückgutfördervorrichtung aufgezeigt, die eine verbesserte Erkennungsquote der Information ermöglicht, die an einem Stückgut angebracht ist. Ein Faktor dabei ist, dass es dem Benutzer auf einfache Weise ermöglicht wird, das Stückgut bezogen auf die Scaneinrichtung richtig zu positionieren. Da die Zentralhalbachse der Scaneinrichtung nicht auf die Förderstrecke weist, kann eine Erkennung insbesondere durchgeführt werden, bevor das Stückgut auf das Förderelement gelegt wird.

Ferner lässt sich durch die vorgeschlagene Beleuchtungseinrichtung und/oder die Einstellung eines definierten Abstands mittels der Abstandsbolzen eine besonders gute Bildqualität erzielen. Schließlich ist es dem Benutzer möglich unmittelbar manuell einzugreifen, wenn eine Erkennung nicht erfolgreich durchgeführt werden konnte. Durch die Bereitstellung des Druckers kann zudem das Stückgut unmittelbar mit einem korrekten Label versehen werden, so dass spätere Nachbearbeitungen an Sonderarbeitsplätzen entfallen oder erheblich reduziert werden.

## Patentansprüche

1. Stückgutfördervorrichtung (10) zum Fördern eines Stückguts (12) von einer Aufnahmestelle (14) zu einer Übergabestelle (16), mit einem Förderelement (18) zum Fördern des Stückguts (12) von der Aufnahmestelle (14) zu der Übergabestelle (16) entlang einer Förderstrecke (20) und mit einer optischen Scaneinrichtung (22) zum Erfassen mindestens einer Oberfläche des Stückguts (12), das von der Stückgutfördervorrichtung (10) zu befördern ist, wobei die Scaneinrichtung (22) ein Sichtfeld (24) mit einer Zentralhalbgeraden (26) aufweist, **dadurch gekennzeichnet, dass** die Zentralhalbgerade (26) nicht auf die Förderstrecke (20) gerichtet ist.

2. Stückgutfördervorrichtung (10) nach Anspruch 1, **dadurch gekennzeichnet, dass** die Förderstrecke (20) eine Förderfläche (48) mit einer Förderflächennormalen (Z) bildet und dass die Zentralhalbgerade (26) in einem Winkel (α) zu der Förderflächennormalen steht, wobei der Winkel (α) bevorzugt zwischen 5° und 175°, besonders bevorzugt zwischen 60° und 120° und insbesondere zwischen 80° und 100° gewählt ist.

3. Stückgutfördervorrichtung (10) nach Anspruch 1 oder 2, **dadurch gekennzeichnet, dass** die Zentralhalbgerade (26) in einem Winkel (β) von größer als 90° zu einer Förderrichtung (X) zwischen der Aufnahmestelle (14) zu der Übergabestelle (16) steht, wobei der Winkel (β) bevorzugt zwischen 95° und 305°, besonders bevorzugt zwischen 150° und 210° und insbesondere zwischen 170° und 190° gewählt ist.

4. Stückgutfördervorrichtung (10) nach einem der vorhergehenden Ansprüche, **dadurch gekennzeichnet, dass** die Förderstrecke (20) eine Förderfläche (48) mit einer Förderflächennormalen (Z) bildet und die Zentralhalbgerade (26) in einer Ebene (50) liegt, die von der Förderflächennormalen (Z) und einer Förderrichtung (X) zwischen der Aufnahmestelle (14) zu der Übergabestelle (16) gebildet ist.

5. Stückgutfördervorrichtung (10) nach einem der vorhergehenden Ansprüche, **dadurch gekennzeichnet, dass** die Zentralhalbgerade (26) im Wesentlichen parallel zu einer stromaufwärtigen Richtung (-X) der Förderstrecke (20) ist.

6. Stückgutfördervorrichtung(10) nach einem der vorhergehenden Ansprüche, **dadurch gekennzeichnet, dass** die Scaneinrichtung (22) in einer stromaufwärtigen Richtung (-X) von der Aufnahmestelle (14) angeordnet ist.

7. Stückgutfördervorrichtung (10) nach einem der vorhergehenden Ansprüche, **dadurch gekennzeichnet, dass** die Scaneinrichtung (22) relativ zum Förderelement (18) fest angeordnet ist.

8. Stückgutfördervorrichtung (10) nach einem der vorhergehenden Ansprüche, **dadurch gekennzeichnet, dass** zumindest ein Teil der Scaneinrichtung (22) verschwenkbar ausgebildet ist, um den Winkel der Zentralhalbgeraden (26) relativ zur stromaufwärtigen Richtung (-X) zu variieren.

9. Stückgutfördervorrichtung (10) nach einem der vorhergehenden Ansprüche, **gekennzeichnet durch** eine Beleuchtungseinrichtung (56), die zur Beleuchtung zumindest eines Bereichs des Sichtfelds (24) ausgebildet ist.

10. Stückgutfördervorrichtung (10) nach Anspruch 9, **dadurch gekennzeichnet, dass** die Beleuchtungseinrichtung (56) eine Vielzahl von Leuchtdioden (58) aufweist.

11. Stückgutfördervorrichtung (10) nach einem der vorhergehenden Ansprüche, **gekennzeichnet durch** mindestens ein Leuchtmittel (60) zur Anzeige einer erwarteten Positionierung und/oder Ausrichtung des Stückguts (12) relativ zum Sichtfeld (24) der Scaneinrichtung (22).

12. Stückgutfördervorrichtung (10) nach einem der vorhergehenden Ansprüche, **dadurch gekennzeichnet, dass** die Scaneinrichtung (22) mindestens einen Abstandsbolzen (66) aufweist, der einen Abstand zur Scaneinrichtung (22) bestimmt, wobei der Abstandsbolzen (66) vorzugsweise im Wesentlichen parallel zur Zentralhalbgeraden (26) ist.

13. Stückgutfördervorrichtung (10) nach Anspruch 12, **dadurch gekennzeichnet, dass** der Abstandsbolzen (66) gegen ein elastisches Element (76), insbesondere eine Feder (76), in seiner Länge veränderbar ist.

14. Stückgutfördervorrichtung (10) nach einem der vorhergehenden Ansprüche, **dadurch gekennzeichnet, dass** das Förderelement (18) mindestens ein Rollen- und/oder ein Bandförderelement (32, 34) aufweist.

15. Stückgutfördervorrichtung (10) nach einem der vorhergehenden Ansprüche, **dadurch gekennzeichnet, dass** die Stückgutfördervorrichtung (10) als Teleskopfördervorrichtung ausgebildet ist, wobei die Scaneinrichtung (22) an einem Teleskopkopf (30) angeordnet ist.
